# EUROPEAN PATENT SPECIFICATION

(11) **EP 1 084 421 B1**
(45) Date of publication and mention of the grant of the patent: **10.12.2003**
(21) Application number: 98926271.2
(22) Date of filing: 04.06.1998
(51) Int. Cl.: G01S 5/00, G01S 5/14

(54) **A REMOTE MOBILE MONITORING AND COMMUNICATION SYSTEM**
ABGESETZTES UND MOBILES ÜBERWACHUNGS- UND ÜBERTRAGUNGSSYSTEM
SYSTEME POUR COMMUNIQUER AVEC DES OBJETS MOBILES ELOIGNES ET LES CONTROLER

(43) Date of publication of application: 21.03.2001
(73) Proprietor: HARRIS CORPORATION, Melbourne, FL 32919 (US)
(72) Inventor: OTTO, James, C., Florida 32901 (US)
(74) Representative: van Berlyn, Ronald Gilbert
(86) International application number: US9811473
(87) International publication number: WO99063357

(56) References cited:
- EP-A- 0 504 513
- EP-A- 0 748 085
- WO-A-96/25673
- US-A- 5 189 395
- US-A- 5 355 511
- US-A- 5 396 227

## Description

The present invention relates to systems for communication with and for monitoring the locations of mobile, remote objects, including people. More particularly, the present invention relates to a system for locating and communicating with the objects (including people) without burdening the monitored object with heavy or bulky communications equipment.

Known systems illustrate the various needs for the present invention and that those efforts only partially meet these needs. For example, house arrest systems continuously monitor persons sentenced to remain within a defined, restricted area to assure they do in fact remain within the permitted area. These systems offer continuous oversight but suffer from being able to monitor the offender only at a single fixed location, e.g., his home.

Other known prisoner monitoring systems attempt to accommodate the offender sentenced to remain principally within one area but is allowed to travel to a second area during limited times, e.g., the offender must remain at her home except during working hours when she may travel to her place of business. However, these systems are not able to continuously monitor the offender and have limited monitoring areas or distances.

Another type problem exists regarding the need to quickly recover stolen vehicles. Certain type vehicles or assets, known as favorite targets of car thiefs, may have installed vehicle tracking systems. These vehicle tracking systems, powered by the vehicle's battery and not unduly limited in size or transmission power capability, allow authorities to track the location of the vehicle over an extended range and for an extended period of time. Such systems, however, do not notify the owner that the vehicle has been stolen and the vehicle is often transported out of the searchable area or disassembled before the theft is discovered and the recovery system activated. A need is therefore present to promptly notify the vehicle owner that the vehicle has been stolen.

In a similar fashion, an automated notification system is needed to notify the proper authorities when an asset has been moved from a fiven location. For example, in banks it is known to hide a small explosive device coupled with a permanent dye within one or more bundles of currency. When the dye-carrying bundle is removed from the bank, a signal is provided to the explosive device causing it to detonate, spewing the dye upon the currency and persons nearby. One problem with such devices is the fact that innocent passers-by may be injured by the impact from the explosion and the fact that the thief may become more violent in response to the explosion. Accordingly, it is desireable to use a proximity locating device within such currency bundles. The passage of the proximity device outside the range of a base unit could be made to cause an alarm to be signaled at the appropriate authorities and, if desired, to initiate geolocating the locating device within the currency bundle, all without alerting the thief or causing explosions in the vicinity of potentially innocent persons.

The specification of U.S. Patent No. 4,918,432 illustrates a known system wherein the monitored individual's movement is limited to a single fixed area, and discloses a system comprising an small transmitter in the form of an identification tag which is worn by the monitored individual and which transmits a periodic signal directly to a Field Monitoring Device (FMD) or, if the fixed area has communication dead spots, via a repeater to the FMD. The FMD then communicates to a central, fixed location, e.g., by modem and telephone line, to notify the central location when the monitored individual leaves or re-enters the monitored area. If the monitored individual leaves the fixed area, the central location is not aware of the individual's location. Disadvantageously, no provision is made for the central location to communicate with the individual or the individual to communicate with the central location. Such features are necessary if the system is being used to monitor and communicate with an individual who is under protective custody such that they must be able to free move about without carry heavy, bulky equipment and such that they must be in ready contact with central monitoring site to transmit or receive a panic signal.

The specification of U.S. Patent No. 5,461,390 illustrates a known effort to provide intermittent mobile monitoring of an individual by periodically contacting and determining the location of a locator device attached to the individual in the form of a small transceiver strapped to the individual's leg. The central location initiates a monitoring cycle by transmitting a polling signal, via a wireless, e.g., cellular, system to the locator. Upon receipt of the polling signal, the locator queries a positioning system to ascertain its current location and transmits the location back to the central computer. The central computer then completes the monitoring cycle by comparing the individual's location against database records to determine if the individual is within at an authorized location. While this system offers a degree of mobility for the monitored individual, requirements to keep the locator device small and lightweight, mandate compromises in transmission distances and frequency with which the locator can be polled. Therefore, continuous monitoring by the central location and communications at greater distances from the wireless transmission points between the central location and the locator device are not possible.

US-A-5,396,227 discloses an electronic monitoring system that monitors an individual for compliance with a protective order. This monitoring system comprises a base for establishing the center of a defined area, proximity means indicating an entity is within the area and means for transmitting a notifying signal to a control center. The control center receives transmissions from the base, and the base can be provided as a mobile base which is carried by the person to be protected. However, concerning the position of the base this reference discloses only that a notifying signal is sent to the control center and that sensor data is recorded.

US-A-5,189,395. discloses an electronic house arrest monitoring system for monitoring the presence or absence of an offender. It comprises a tag carried by the offender and a stationary base which establishes the center of a defined area. If further comprises a control center for receiving transmissions from the base indicating whether the offender carrying the tag is within the range of the base or not.

US-A-5,355,511 and EP 074 085 A1 disclose geolocating systems which are used for indicating the exact position of an entity and transmitting this position to a control center for further processing. However. these reference do not refer to monitoring system to detect whether an entity has left or entered an area defined by a mobile base.

The invention consists in a system for monitoring whether an entity is within a defined area or has left the defined area, defined around a mobile base, said mobile base comprising a portable first power source so that said base may be transported, first proximity means for determining whether the entity is within the defined area or has left the defined area, said first proximity means being operable with a second proximity means carried by the entity for setting a size of the defined area and determining whether the entity is within the defined area or has left the defined area, characterised in that the mobile base comprises a geolocating device for determining a location of said base, and means for transmitting the location of said base determined by said geolocating device and an indication of whether the entity is within the defined area or has left the defined area provided by said first proximity means.

The invention will now be described by way of example with reference to the accompanying drawings in which:
Figure 1 is a pictorial representation of one embodiment of the system.
Figure 2 is a pictorial representation of an alternative embodiment of the system.

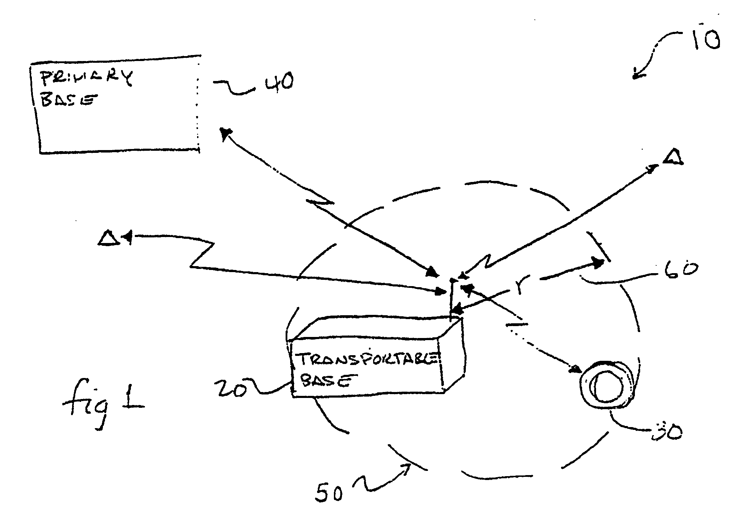

Figure 1 illustrates an embodiment for use as a prisoner monitoring system which monitors the prisoner within a defined area about a mobile but constantly known location. The system 10 may include three principal, interactive components: a transportable base 20, a prisoner bracelet or tag 30, and a primary control base 40.

The transportable base 20 includes a portable power source which enables the long-term, mobile movement of the transportable base and, accordingly, the prisoner; a geolocating device which enables the system to remain cognizant of the location of the transportable base; a first proximity device cooperatively operating with the prisoner bracelet 30 to monitor whether the prisoner is within the defined monitoring area 50; and a transmitter for continuously communicating with the primary control base its current location and an indication of whether the prisoner is within the defined monitoring area. Thus, by serving intermediate the prisoner bracelet and the primary control base and by remaining in constant communications with both the prisoner bracelet and the primary control base, the transportable base 20 facilitates continuous prisoner monitoring while allowing the prisoner an increased degree of mobility albeit while being electronically tethered to the transportable base.

The prisoner bracelet 30 (or "tag") is affixed to the prisoner in one of several known ways by a form-fitting strap to the leg or by close fitting rigid multi-piece bracelet around a forearm above the wrist. The bracelet 30 includes a second proximity device operable with the first proximity device of the transportable base 20. The transmission characteristics of the first and second proximity devices jointly define a monitoring distance, "r" 60, between the two devices originating at the transportable base. The area circumscribed about the transportable base by the monitoring distance, "r", determines the monitoring area 50. The monitoring distance 60, and hence the monitoring area 50, is desirably set a some amount less than the maximum communication range between the transportable base and the prisoner bracelet.

The unit could be used to monitor the location of school children on a field trip or outing, with the transportable base being carried in a school bus. In another embodiment, a system can be used to ensure that sentries are properly posted within a predetermined range of an object to be protected. Note that the ability of the transportable base to be moved and to geolocate enhances the usefulness of the invention as the transportable system may be readily established around any area needing security (such as the area surrounding a head of state while on tour.)

The transportable base may include conventional means such as signal strength, doppler effects, phase shifting, radio direction finding, Time Difference of Arrival ("TDOA") and radio frequency ranging for determining the set monitoring distance and the actual distance between itself and the bracelet.

The means for determining monitoring distance determine a distance from a receiver but not a location with respect to the receiver. In an alternative embodiment, a system in accordance with the present invention may also include a transportable base unit having amontioring means which can determine more than the distance a monitored object is from the base station but may also provide information regarding the location and/or relative location of the monitored object from the transportable base unit.

In such an alternative system, sentries in a defined area could be monitored to ensure not only that they have not left the defined area but that they are positioned with respect to one another to avoid "holes" in the perimeter of the monitored area. In such a system, each sentry could carry a mobile unit and be monitored by the transportable unit as to position. The transportable unit or the central unit may use the sentry position information to ensure that the sentries remain on post and have not unwittingly converged in one area, leaving another area unprotected.

Similarly, in an alternative embodiment, the system may be used to monitor mobile objects such as automated search equipment. In such an embodiment, the mobile equipment can be affixed, for example, to mobile sensor systems which are used to search a defined territory for a predetermined object. By monitoring the mobile units with the alternative base unit having the ability to locate the mobile units, the user of the system may ensure that the entirety of a given area has been searched.

In a preferred embodiment the transportable base and the prisoner bracelet communicate using an conventional RF scheme and protocol. Alternative means of communications include microwave, radio frequency, spread spectrum, and proprietary RF encoding/ decoding schemes.

The primary control base 40, receiving communications from the transportable base, monitors the location of the transportable base and whether the prisoner has left the monitored area. In a preferred embodiment, the transportable base communications, received by the primary control base, consist of a location communication and an affirmative communication that the prisoner is within the monitored area. In an alternative embodiment, the transportable base communications consist of a location communication and a communication only if the prisoner leaves the monitored area. In yet another embodiment, the transportable base only sends location communications when the transportable base is mobile and its location is changing.

Geolocating of the transportable base may use any conventional geolocating technique and may be carried out by the transportable base or by another system. For example, the transportable base may use geolocating navigation satellites, inertial navigation, dead reckoning based on self-contained sensors, or any of the many navigation aids currently available (such as LORAN and/or aircraft systems.) Alternatively, the transportable base may provide a signal or have an identifying characteristic such that other systems can determine the location of the transportable base and communicate the geolocation of the base to the central system. Examples of such systems include the use of a beacon emanating from the transportable unit which can be sensed and geolocated by existing radio receivers such as orbiting satellites or cellular base stations. In such a situation, the sensing unit may use conventional means to report the geolocation of the transportable base to the central location. If needed for a particular application, the transportable unit may be energized while moving, permitting the monitoring system to be operating even though it is not in a fixed location.

In another embodiment the transportable base and the primary control base communicate using RF communications. Alternative means of communications include microwave, radio frequency, spread spectrum, satellite link, computer network, direct digital (ISDN) and/or modulated signals over a telephone link. Generally, it is desirable that such signals between the base unit and the central unit be encrypted or encoded in such a way so that the system cannot be readily fooled or spoofed by intercepting or interfering signals.

The transportable unit may monitor a plurality of mobile units, such units providing either distance or location information, and each identifying itself to the transportable unit by conventional means.

The primary control base also includes means for selectively displaying the location of the transportable base and an "out-of-area" alarm for indicating receipt of an indication the prisoner has left the monitored area centered on the transportable base.

Because the bracelet requires only minimal circuitry to communicate with the transportable base and is not burdened with other functions such as geolocating or transmissions back to the primary control base, its power requirements are greatly reduced permitting long battery life in a small and unobtrusive package. Since the transportable base may be located at a convenient distance from the prisoner and may be concealed within an unobtrusive container such as an automobile trunk or a briefcase, the size and power consumption of the transportable base are less critical. The portable power supply may therefor be of convention design and sized to meet monitoring/transmission distance and duration requirements consistent with the specific prisoner monitoring application.

In an alternative embodiment, some of the components described as being in the transportable base may be included in the mobile unit and vice versa and still come within the scope of the present application. For example, the geolocating capability may be contained in the mobile units which relay a relatively low power signal with the geolocation information to the transportable base unit. Because the mobile units communicate with a relatively nearby transportable base unit and not with a remote central unit, the power requirements for this embodiment of a mobile unit may be kept minimal to reduce the need for and weight of a large battery to be carried around by the mobile user.

In such instances the size of the monitored area by desirably be changed to increase or decrease the distance from the transportable base the monitored individual would be allowed to move without setting off an "out-of-area" alarm. As described, by varying the power and transmission characteristics of the first and second proximity devices, the monitoring distance, "r", between the two devices may be varied. To accommodate this, the transportable base may further include means for a local operator to vary the power to or the transmission characteristics of the first proximity device to vary the effective monitoring distance. In this way the monitored individual is provided with either a smaller or larger monitored area. Alternatively, the primary monitoring base may include a transmitter and the transportable base may include a receiving section so that the primary monitoring base may selectively change the monitoring distance by sending a signal to the transportable base.

In another alternative where the monitored individual is provided more information and control, the transportable base may transmit distance information to the bracelet which may include a distance indicator. In this embodiment, the bracelet may include a selector which causes the transmission of signals to the transportable base to selectively change the monitoring distance. the bracelet may further include a "panic button" which, upon depression, transmits a signal to the transportable base, which signal causes the transportable base to send a panic signal to the primary control base. The control base includes an alarm for indicating receipt of the panic signal.

Such a monitoring application may also require that the primary control base quickly contact the monitored individual. The control base may selectively transmit a signal to the transportable base, such signal causing the transportable base to transmit a signal to the bracelet. The bracelet may include a means to receive this signal and an alarm indicating the receipt of the signal.

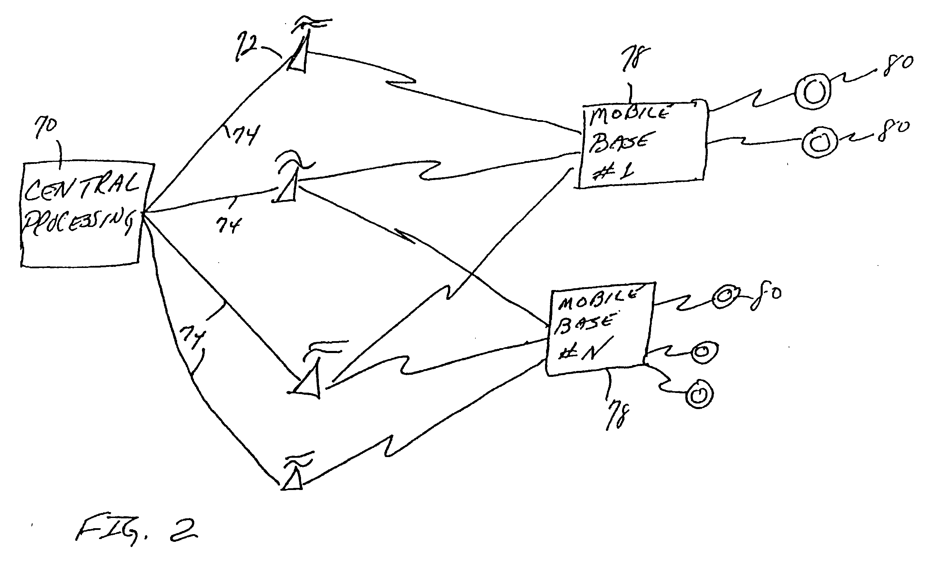

Figure 2 shows an alternative embodiment which includes a central processing unit 70 which communicates with one or more substations 72 via conventional communications links 74. The substations 72 communicate with one or more mobile base stations 78, each of which may be communicating with one or more monitored units 80.

The base stations 78 communicate with the monitored units 80 to ensure that the monitored units 80 remain within a desired proximity to the base station 78. The mobile base stations may determine their own geolocation (such as by a GPS locator) and send information regarding their location to the substations 72 or may provide a signal by which an external devcie or system may determine and report the geolocation of the mobile base 78 to the substation 72. As the mobile base stations 78 travel from one location to another, the base stations 78 may communicate with different substations 72 so that an entire region, covered by plural substations 72, may be within the permissible travel locations of the base stations 78. As the mobile stations travel from the area of one substation 72 to another, the control of and information regarding the mobile base stations 78 may be passed from one substation 72 to another, under the control of the central processing unit 70.

A system and method for monitoring the location and/or presence of an object/person within a desired area includes a mobile base station, a central control center, a mobile signaling device carried by the monitored object/person, and a geolocating means. The mobile base station may be transported to an arbitrary site and retains the monitored object/person within a desired area. The central control center determines the acceptability of the location of the monitored object/person and may raise an alarm condition when the monitored object/person is not within the desired area.

## Claims

1. A system for monitoring whether an entity is within a defined area (50) or has left the defined area, defined around a mobile base (78), said mobile base comprising a portable first power source so that said base may be transported, first proximity means for determining whether the entity is within the defined area or has left the defined area, said first proximity means being operable with a second proximity means carried by the entity for setting a size of the defined area and determining whether the entity is within the defined area or has left the defined area, **characterised in that** the mobile base comprises a geolocating device for determining a location of said base, and means for transmitting the location of said base determined by said geolocating device and an indication of whether the entity is within the defined area or has left the defined area provided by said first proximity means.

2. A system as claimed in claim 1 including a control center (70) for monitoring the location of said base and for providing an indication that the entity is not within the defined area, said control center comprising means for receiving transmissions from said base, means for selectively displaying the location of said base, and an alarm for indicating receipt of the indication that the entity is not within the defined area.

3. A system as claimed in claim 1 or 2 including means for selectively varying the size of the defined area set by said first and second proximity means from said control center, or said base.

4. A system as claimed in one of the preceding claims wherein said base comprises means for varying the size of the defined area set by said first and second proximity means, including a second power source to provide said base with an alternative power source.

5. A system as claimed in any one of the preceding claims wherein the base comprises an alarm activated upon the first proximity means ascertaining the entity is not within the defined area and a means for transmitting a notification signal to the second proximity means, wherein the notification signal may be responsive to distance or selective from base or control center.

6. A system as claimed in one of the preceding claims, wherein said base comprises a tag for being carried by the entity comprising second proximity means operable with said first proximity means for setting a size of the defined area and determining that the entity has left the defined area.

7. A system as claimed in claim 6 including means for selectively varying the size of the defined area set by said first and second proximity means from said tag, and said means for transmitting and said means for receiving comprise a computer network, in which said base further comprises a means for determining the distance between said base and said tag.

8. A system as claimed in claim 6 or 7 wherein said base comprises a means for transmitting the distance between said base and said tag to said tag, and said tag has a means for indicating said distance to allow said entity carrying said tag to monitor the distance between said base and said tag, which comprises means also for selectively causing said base to transmit to said control center to allow said entity to signal said control center.

9. A system as claimed in claim 6, 7, or 8 wherein said control center comprises an alarm for indicating receipt of said signal transmission initiated by said entity and said base comprises an alarm for indicating the tag has initiated a signal transmission to the control center, in which said control center comprises means for selectively causing said base to transmit to said tag to allow said control center to signal said entity carrying said tag and said tag comprises an alarm for indicating receipt of said signal transmission initiated by said control center.

## Patentansprüche

1. Ein System zum Überwachen ob eine Entität sich innerhalb eines definierten Bereiches (50) befindet oder ob sie den definierten Bereich verlassen hat, der um eine mobile Basis (78) herum definiert ist, wobei die mobile Basis eine tragbare erste Leistungsquelle aufweist, so dass diese Basis transportiert werden kann, eine erste Annäherungseinrichtung zum Bestimmen, ob die Entität sich innerhalb des definierten Bereiches befindet oder den definierten Bereich verlassen hat, wobei die erste Annäherungseinrichtung mit einer zweiten Annäherungseinrichtung zusammen wirken können, die von der Entität getragen wird um die Größe des definierten Bereiches festzulegen und zu bestimmen ob die Entität sich innerhalb des definierten Bereiches befindet oder den definierten Bereich verlassen hat, **dadurch gekennzeichnet dass** die mobile Basis ein Ortsbestimmungsgerät aufweist zum Bestimmen eines Ortes der Basis, sowie zum Aussenden des durch das Ortsbestimmungsgerät definierten Ortes der Basis sowie eine Angabe ob die Entität sich innerhalb des definierten Bereiches befindet oder den definierten Bereich verlassen hat, der durch die ersten Annäherungseinrichtung bereitgestellt wird.

2. Ein System wie in Anspruch 1 beansprucht, umfassend ein Kontrollzentrum (70) zum Überwachen des Ortes der Basis und zum Bereitstellen einer Angabe dass die Entität sich nicht innerhalb des definierten Bereiches befindet, wobei das Kontrollzentrum eine Einrichtung zum Empfangen von Aussendungen von der Basis, eine Einrichtung zum wahlweisen Anzeigen des Orts der Basis sowie einen Alarm zum Angeben eines Empfangs der Angabe dass die Entität sich nicht innerhalb des definierten Bereiches befindet, aufweist.

3. Ein System wie in Anspruch 1 oder 2 beansprucht, umfassend eine Einrichtung zum wahlweisen Variieren der Größe des definierten Bereichs der durch die erste und die zweite Annäherungseinrichtung, von dem Kontrollzentrum oder der Basis aus bestimmt ist.

4. Ein System wie einem der vorhergehenden Ansprüche beansprucht, wobei die Basis eine Einrichtung zum Verändern der Größe des definierten Bereichs umfasst, welche durch die erste und die zweite Annäherungseinrichtung festgelegt ist, umfassend eine zweite Leistungsquelle um die Basis mit einer attemativen Leistungsquelle auszustatten.

5. Ein System wie es in einem der vorhergehenden Ansprüche beansprucht ist, wobei die Basis einen Alarm aufweist, der aktiviert wird sofern die erste Annäherungseinrichtung feststellt, dass die Entität sich nicht innerhalb des definierten Bereiches befindet, und eine Einrichtung zum Aussenden eines Mittellungssignals an die zweite Annäherungseinrichtung, wobei das Mitteilungssignal auf Entfernung ansprechen oder selektiv von der Basis oder dem Kontrollzentrum sein kann.

6. Ein System wie in einem der vorhergehenden Ansprüche beansprucht, wobei die Basis einen Anhänger aufweist, um von der Entität getragen zu werden, welche die zweite Annäherungseinrichtung aufweist, die mit der ersten Annäherungseinrichtung zusammenwirkt um die Größe des definierten Bereichs festzulegen und zu bestimmen, dass die Entität den definierten Bereich verlassen hat.

7. Ein System wie in Anspruch 6 beansprucht, umfassend eine Einrichtung zum wahlweisen Verändern der Größe des definierten Bereichs die durch die erste und die zweite Annäherungseinrichtung von dem Anhänger bestimmt ist, und wobei die Einrichtung zum Aussenden und die Einrichtung zum Empfangen ein Computernetzwerk umfassen, in dem die Basis des Weiteren eine Enrichtung zum Bestimmen des Abstands zwischen der Basis und dem Anhänger umfassen.

8. Ein System wie in Anspruch 6 oder 7 beansprucht, in dem die Basis eine Einrichtung zum Aussenden des Abstandes zwischen der Basis und dem Anhänger zu dem Anhänger aufweist, wobei der Anhänger eine Einrichtung zum Anzelgen des Abstandes aufweist um die Entität in die Lage zu versetzen, den Anhänger zu tragen um den Abstand zwischen der Basis und dem Anhänger zu überwachen, der auch Einrichtungen aufweist zum wahlweisen Bewirken, dass die Basis an das Kontrollzentrum sendet um die der Entität zu erlauben, dem Kontrollzentrum zu signalisieren.

9. Ein System wie in Anspruch 6, 7 oder 8 beansprucht, in dem das Kontrollzentrum einen Alarm aufweist, um den Empfang der Signalübermittlung anzuzeigen, der von der Entität eingeleitet wurde und die Basis einen Alarm umfasst, um anzuzeigen dass der Anhänger eine Signalübermittlung an das Kontrollzentrum eingeleitet hat, indem das Kontrollzentrum eine Einrichtung umfasst zum wahlweisen hervorrufen dass die Basis dem Anhänger aussendet, um dem Kontrollzentrum zu gestatten, der Entität, welche den Anhänger trägt zu signalisieren und der Anhänger einen Alarm aufweist, um den Empfang der durch das Kontrollzentrum eingeleiteten Signalübertragung anzuzeigen.

## Revendications

1. Système pour contrôler si une entité est à l'intérieur d'une zone définie (50) ou si elle a quitté la zone définie, définie autour d'une base mobile (78), ladite base mobile comprenant une première source d'énergie portative pour que ladite base puisse être transportée, ledit premier moyen de proximité pour déterminer si l'entité est à l'intérieur de la zone définie ou si elle a quitté la zone définie, ledit premier moyen de proximité étant utilisable avec un second moyen de proximité supporté par l'entité pour fixer une taille de la zone définie et déterminer si l'entité est à l'intérieur de la zone définie ou si elle a quitté la zone définie, **caractérisé en ce que** la base mobile comprend un dispositif de localisation géographique pour déterminer un emplacement de ladite base déterminé par ledit dispositif de localisation géographique et une indication sur si l'entité est à l'intérieur de la zone définie ou si elle a quitté la zone définie fournie par ledit premier moyen de proximité.

2. système selon la revendication 1 comprenant un centre de commande (70) pour contrôler l'emplacement de ladite base et pour fournir une indication sur le fait que l'entité n'est pas à l'intérieur de la zone définie, ledit centre de commande comprenant le moyen pour recevoir des transmissions provenant de ladite base, le moyen pour afficher de façon sélective l'emplacement de ladite base, et une alarme pour indiquer la réception de l'indication sur le fait que l'entité n'est pas à l'intérieur de la zone définie.

3. Système selon la revendication 1 ou 2 comprenant le moyen de changer de façon sélective la taille de la zone définie fixée par lesdits premier et second moyens de proximité à partir dudit centre de commande, ou de ladite base.

4. Système selon l'une quelconque des revendications précédentes, dans lequel ladite base comprend le moyen pour changer la taille de la zone définie fixée par lesdits premier et second moyens de proximité, comprenant une seconde source d'énergie pour fournir à ladite base une source d'énergie alternative.

5. Système selon l'une quelconque des revendications précédentes, dans lequel la base comprend une alarme activée lorsque le premier moyen de proximité constate que l'entité n'est pas à l'intérieur de la zone définie et un moyen pour transmettre un signal de notification au second moyen de proximité, dans lequel le signal de notification peut être sensible à la distance ou sélectif depuis la base ou le centre de commande.

6. Système selon l'une quelconque des revendications précédentes, dans lequel ladite base comprend une balise pour être transportée par l'entité comprenant le second moyen de proximité utilisable avec ledit premier moyen de proximité pour fixer une taille de la zone définie et déterminer que l'entité a quitté la zone définie.

7. Système selon la revendication 6 comprenant le moyen pour changer de façon sélective la taille de la zone définie fixée par lesdits premier et second moyens de proximité depuis ladite balise, et ledit moyen de transmission et ledit moyen de réception comprennent un réseau d'ordinateurs, dans lequel ladite base comprend en outre un moyen pour déterminer la distance entre ladite base et ladite balise.

8. Système selon la revendication 7 ou 8, dans lequel ladite base comprend un moyen pour transmettre la distance entre ladite base et ladite balise à ladite balise, et ladite balise a un moyen pour indiquer ladite distance pour permettre à ladite entité transportant ladite balise de contrôler la distance entre ladite base et ladite balise, ce qui comprend le moyen également pour faire émettre de façon sélective à ladite base vers ledit centre de commande pour permettre à ladite entité de transmettre des signalisations au dit centre de commande.

9. Système selon la revendication 6, 7 ou 8, dans lequel ledit centre de commande comprend une alarme pour indiquer la réception de ladite transmission de signaux lancée par ladite entité et ladite base comprend une alarme pour indiquer que la balise a lancé une transmission de signaux vers le centre de commande, dans lequel ledit centre de commande comprend le moyen pour faire émettre de façon sélective par ladite base vers ladite balise pour permettre au dit centre de commande de transmettre des signalisations à ladite entité transportant ladite balise et ladite balise comprend une alarme pour indiquer la réception de ladite transmission de signaux lancée par ledit centre de commande.
